# EUROPEAN PATENT APPLICATION

(11) **EP 4 647 762 A1**
(43) Date of publication of application: **12.11.2025**
(21) Application number: 25175182.2
(22) Date of filing: 08.05.2025
(51) Int. Cl.: G01N 29/22

(54) **INSPECTING INTERNAL POWERPLANT COMPONENT USING INSPECTION SCOPE**

(30) Priority: 08.05.2024 US 202418658468
(71) Applicant: RTX Corporation, Farmington, CT 06032 (US)
(72) Inventor: STUSSE, James J., Middletown, 02842 (US); CONEY, William B., Watertown, 02472 (US)
(74) Representative: Dehns

(57) **Abstract**

An inspection method is provided during which a head (36) of an inspection scope (28) is inserted into an interior (26) of a powerplant (24). The head (36) of the inspection scope (28) includes an actuator (40). The powerplant (24) includes a component (22) within the interior (26) of the powerplant (24). The head (36) of the inspection scope (28) is arranged within the interior (26) of the powerplant (24) with the actuator (40) contacting the component (22). An expandable mount (44) is deployed within the interior (26) of the powerplant (24) to fix a position of the head (36) of the inspection scope (28) within the interior (26) of the powerplant (24) and maintain contact between the actuator (40) and the component (22). Vibrations are induced in the component (22) using the actuator (40).

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY OF THE DISCLOSURE

According to an aspect of the present invention, an inspection method is provided during which a head of an inspection scope is inserted into an interior of a powerplant. The head of the inspection scope includes an actuator. The powerplant includes a component within the interior of the powerplant. The head of the inspection scope is arranged within the interior of the powerplant with the actuator contacting the component. An expandable mount is deployed within the interior of the powerplant to fix a position of the head of the inspection scope within the interior of the powerplant and maintain contact between the actuator and the component. Vibrations are induced in the component using the actuator.

According to another aspect of the present invention, another inspection method is provided during which a head of an inspection scope is inserted into an interior of a powerplant. The head of the inspection scope includes an actuator. The powerplant includes a component within the interior of the powerplant. The head of the inspection scope is located next to the component with the actuator contacting the component. An inflatable bladder is inflated within the interior of the powerplant to fix a position of the head of the inspection scope within the interior of the powerplant. Vibrations are induced in the component using the actuator while contact between the actuator and the component is maintained using the inflatable bladder. A vibratory response in the component excited by the vibrations is measured using a sensor to provide sensor data. A defect internal to the component is detected based on the sensor data.

According to still another aspect of the present invention, a system is provided for inspecting a component within an interior of a powerplant. This system includes an inspection scope and a processing system. The inspection scope includes a scope head, an expandable mount and a scope body that extends longitudinally along a centerline to a proximal end of the scope head. The scope head includes an actuator and a sensor with the actuator and the sensor disposed at a distal end of the inspection scope. The expandable mount is disposed at the proximal end of the scope head. The inspection scope is configured for insertion of the scope head into the interior of the powerplant to abut the actuator and the sensor against the component. The actuator is configured to induce vibrations in the component. The sensor is configured to measure a vibratory response in the component excited by the vibrations to provide sensor data. The expandable mount is configured to expand to: maintain contact between the actuator and the component during the inducement of the vibrations in the component; and maintain contact between the sensor and the component during the measurement of the vibratory response in the component. The processing system is configured to process the sensor data to determine a characteristic of the component based on the sensor data.

The system may also include a fluid source configured to direct a gas into an internal volume of an inflatable bladder to expand a size of the inflatable bladder. The expandable mount is configured as or otherwise includes the inflatable bladder.

The inspection scope may include the head of the inspection scope, the expandable mount and a scope body extending longitudinally along a centerline to the head of the inspection scope. The head of the inspection scope may be connected to the scope body and disposed at a distal end of the inspection scope. The expandable mount may be connected to the scope body longitudinally next to the head of the inspection scope.

The inspection scope may include the head of the inspection scope, the expandable mount and a scope body extending longitudinally to a longitudinal end of the head of the inspection scope. The head of the inspection scope may be located at a distal end of the inspection scope. The expandable mount may be located at the longitudinal end of the head of the inspection scope.

The deploying of the expandable mount may include directing a fluid into an internal volume of the expandable mount to increase a size of the expandable mount.

The inspection method may also include directing the fluid out of the internal volume of the expandable mount to decrease the size of the expandable mount following the inducing of the vibrations.

The expandable mount may be configured as or otherwise include an expandable bladder. The expandable bladder may extend longitudinally along a centerline between a first end and a second end. The expandable bladder may extend circumferentially about the centerline.

A position of the first end of the expandable bladder may be fixed along the centerline. A position of the second end of the expandable bladder may be fixed along the centerline.

A position of the first end of the expandable bladder may be fixed along the centerline. A position of the second end of the expandable bladder may be moveable along the centerline.

A position of the first end of the expandable bladder may be fixed along the centerline. A position of the second end of the expandable bladder may move along the centerline towards the position of the first end of the expandable bladder as the expandable bladder is inflated.

The component may be a first component. The powerplant may also include a second component within the interior of the powerplant. The second component may include an aperture. The inspection scope may extend longitudinally along a centerline through the aperture with the head of the inspection scope disposed between the first component and the second component. The expandable mount may be disposed between the first component and the second component and may be longitudinally abutted against the second component adjacent the aperture when the expandable mount is deployed.

The component may be a first component. The powerplant may also include a second component within the interior of the powerplant. The second component may include an aperture. The inspection scope may extend longitudinally along a centerline through the aperture with the head of the inspection scope disposed between the first component and the second component. The expandable mount may be disposed at least partially within the aperture and may be radially abutted against the second component when the expandable mount is deployed.

The inspection method may also include stowing the expandable mount following the inducing of the vibrations.

The position of the head of the inspection scope may be fixed within the interior of the powerplant by the expandable mount to further maintain a preload between the actuator and the component.

The inspection method may also include measuring a vibratory response in the component excited by the vibrations using a sensor to provide sensor data.

The inspection method may also include determining a characteristic of the component based on the sensor data.

The inspection method may also include detecting a defect internal to the component based on the sensor data.

The head of the inspection scope may also include the sensor.

The sensor may be configured as or otherwise include a piezoelectric device.

The actuator may be configured as or otherwise include a piezoelectric device.

The powerplant may be configured as or otherwise include a turbine engine. The component may be configured as a rotor disk within the turbine engine.

The powerplant may be installed with an aircraft during the inserting, the arranging, the deploying and the inducing.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIGS. 2A-C are schematic illustrations of a portion of the inspection system with the powerplant component, where an expandable mount of the inspection system is in various deployed arrangements.
FIG. 3 is a flow diagram of a method for inspecting a component of a powerplant.
FIGS. 4A-C are schematic illustrations of a portion of the inspection system with the powerplant component, where the expandable mount is in various stowed arrangements.
FIGS. 5A and 5B are graphs of various measured resonant signatures compared to a model resonant signature.
FIG. 6 is a schematic illustration of the inspection system with the powerplant component, where a scope head of the inspection system is configured with a single actuator-sensor device.
FIGS. 7 and 8 are partial illustrations of an inspection scope with a fluidic expandable mount in stowed and deployed arrangements.
FIGS. 9 and 10 are partial illustrations of the inspection scope with another fluidic expandable mount in stowed and deployed arrangements.
FIGS. 11 and 12 are partial illustrations of the inspection scope with a mechanically expandable mount in stowed and deployed arrangements.
FIGS. 13-15 are partial schematic illustrations of the inspection scope with the mechanically expandable mount in various stowed and deployed arrangements.

### DETAILED DESCRIPTION

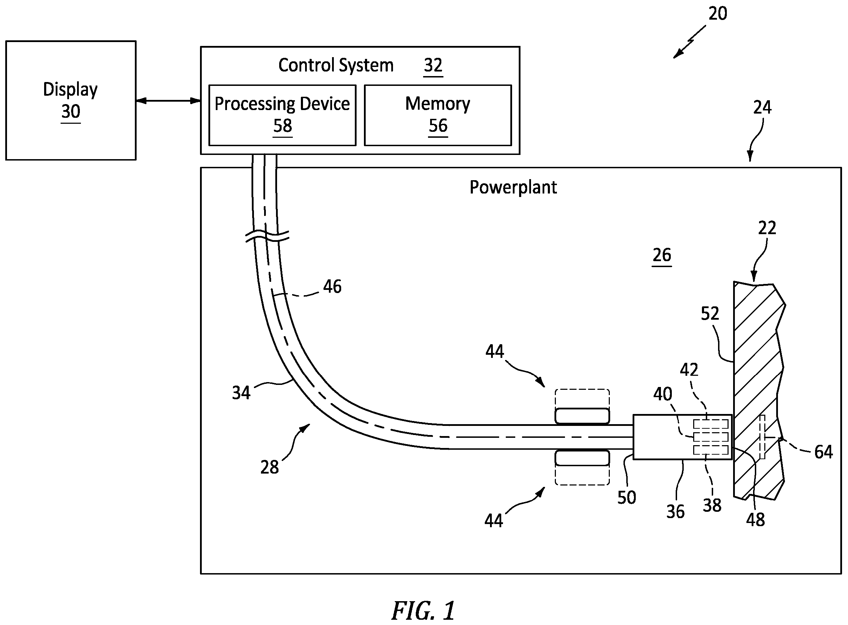

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as an inspection scope inspection system. The inspection system 20 of FIG. 1, for example, includes an electronic inspection scope 28 (e.g., a borescope), a display 30 (e.g., a screen, a monitor, a touch screen, etc.) and a control system 32.

The inspection scope 28 of FIG. 1 includes a scope body 34 (e.g., a tether), a scope head 36, a scope sensor 38, a vibration actuator 40 and a vibration sensor 42. The inspection scope 28 of FIG. 1 also includes an expandable mount 44; e.g., an anchor for the inspection scope 28. This expandable mount 44 may be configured as a fluidic expandable mount and/or a mechanically expandable mount. In FIG. 1, the expandable mount 44 is schematically shown in a stowed arrangement by a solid line and in a deployed arrangement by the dashed line.

The scope body 34 extends longitudinally along a longitudinal centerline 46 of the inspection scope 28 and its members 34 and 36 from a base end of the inspection scope 28 to the scope head 36. The scope body 34 is a flexible body. The scope body 34 may include one or more internal actuators for manipulating a configuration of the inspection scope 28 and its scope body 34 to aid in maneuvering the scope head 36 within the interior 26 of the aircraft powerplant 24 to the powerplant component 22.

The scope head 36 is disposed at a longitudinal distal end 48 of the inspection scope 28. The scope head 36 of FIG. 1, for example, extends longitudinally along the centerline 46 from a longitudinal proximal end 50 of the scope head 36 to the scope distal end 48 of the inspection scope 28; here, also a longitudinal distal end of the scope head 36. The scope sensor 38, the vibration actuator 40 and the vibration sensor 42 are each arranged with (e.g., mounted to and/or disposed in) the scope head 36. The scope sensor 38, the vibration actuator 40 and/or the vibration sensor 42 may also each be disposed at (e.g., on, adjacent or proximate) the scope distal end 48.

The scope sensor 38 is configured to aid in the maneuvering of the scope head 36 and, more particularly, the vibration actuator 40 and/or the vibration sensor 42 within the interior 26 of the aircraft powerplant 24 towards the powerplant component 22. The scope sensor 38, for example, may be configured as a camera (e.g., a still image camera and/or a video camera), a proximity sensor, or the like which (e.g., in real time) locates the scope head 36 and/or the scope members 40 and/or 42 during the maneuvering of the scope head 36, within the interior 26 of the aircraft powerplant 24, towards the powerplant component 22.

The vibration actuator 40 is configured to induce vibrations in the powerplant component 22 based on a control signal received from the control system 32. The vibration sensor 42 is configured to measure a vibratory response in the powerplant component 22 excited by the vibrations induced by the vibration actuator 40. The vibration sensor 42 is further configured to provide sensor data (e.g., an output signal or signals) to the control system 32 indicative of the measured vibratory response.

The vibration actuator 40 and/or the vibration sensor 42 may each be configured as or otherwise include a piezoelectric device. Examples of the piezoelectric device include, but are not limited to, a piezoelectric stack and a single crystal piezoelectric device. The piezoelectric stack may include a longitudinal stack (or multiple layers) of piezoelectric actuators. The single crystal piezoelectric device may include a piezoelectric ceramic element with a single crystal orientation and no grain boundaries. In general, the single crystal piezoelectric device may provide higher power and greater sensitivity than a comparable piezoelectric stack. The present disclosure, however, is not limited to the foregoing exemplary piezoelectric device configurations. Moreover, it is contemplated the vibration actuator 40 may be configured as another type of electromechanical device operable to induce vibrations, and/or the vibration sensor 42 may be configured as another type of electromechanical device operable to measure the vibratory response. For example, one or both of the scope members 40 and/or 42 may be configured as a capacitive transducer; e.g., a capacitive micromachine ultrasonic transducer (CMUT) or a piezoelectric micromachined ultrasonic transducer (PMUT).

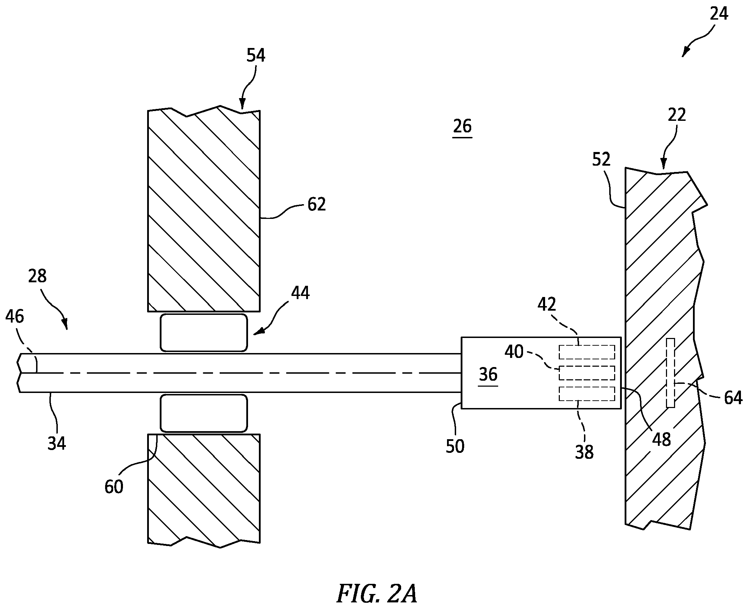

The expandable mount 44 may be disposed with and/or connected to the scope head 36. The expandable mount 44 may alternatively (or also) be disposed with and/or connected to the scope body 34, for example at the head proximal end 50 or otherwise near the scope head 36 and its head proximal end 50. Referring to FIGS. 2A-C, the expandable mount 44 is configured to anchor the inspection scope 28 within the aircraft powerplant 24 to fix a position of the scope head 36 within the interior 26 of the aircraft powerplant 24 relative to the powerplant component 22. Moreover, the expandable mount 44 is configured to maintain engagement (e.g., contact and/or a preload) between the scope head member(s) 40 and/or 42 and an exterior surface 52 of the powerplant component 22, for example once the scope head 36 is in its fixed position next to the powerplant component 22 within the interior 26 of the aircraft powerplant 24. The expandable mount 44 of FIGS. 2A-C, for example, is configured to expand in size (e.g., lateral width, diameter, circumference, etc.) in order to engage another component 54 within the interior 26 of the aircraft powerplant 24 that is next to or near the powerplant component 22 to be inspected. This engagement may temporarily fixedly couple the inspection scope 28 and its members 34 and 36 to the second powerplant component 54 as described below in further detail.

Referring to FIG. 1, the control system 32 is configured in signal communication (e.g., hardwired and/or wirelessly coupled) with the inspection scope 28 and its scope members 38, 40 and 42 as well as the display 30. The control system 32 of FIG. 1 may be in signal communication with the scope members 38, 40 and 42 through one or more (e.g., electrically conductive and/or optical) signal paths extending within the scope body 34. The control system 32 may be implemented with a combination of hardware and software. The hardware may include memory 56 and at least one processing device 58, which processing device 58 may include one or more single-core and/or multi-core processors. The hardware may also or alternatively include analog and/or digital circuitry other than that described above.

The memory 56 is configured to store software (e.g., program instructions) for execution by the processing device 58, which software execution may control and/or facilitate performance of one or more operations such as those described below. The memory 56 may be a non-transitory computer readable medium. For example, the memory 56 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

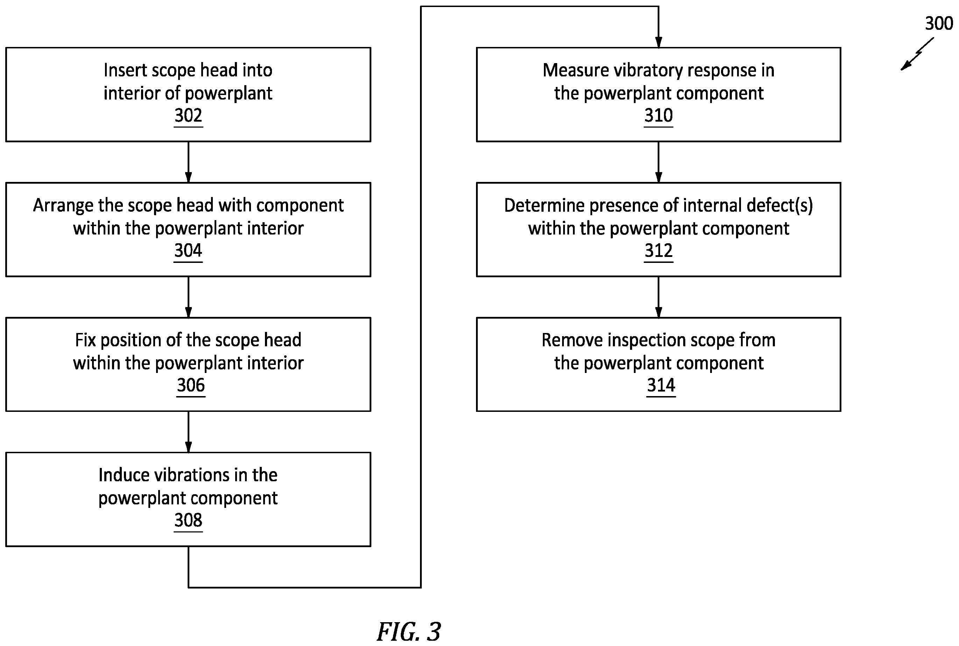

FIG. 3 is a flow diagram of a method 300 for inspecting the powerplant component 22 - a specimen component to be inspected. For ease of description, the inspection method 300 is described below with reference to the inspection system 20 of FIG. 1. The powerplant component 22 is also described below as being installed with the aircraft powerplant 24 and disposed within the interior 26 of the aircraft powerplant 24, where the aircraft powerplant 24 remains installed onboard the aircraft. The inspection method 300 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 302, the scope head 36 is inserted into the interior 26 of the aircraft powerplant 24. An access cover, a powerplant component and/or the like, for example, may be removed from the aircraft powerplant 24 or opened to provide an access port into the interior 26 of the aircraft powerplant 24. The scope head 36 may then be passed through the access port into the interior 26 of the aircraft powerplant 24.

In step 304, the scope head 36 is arranged with the powerplant component 22 within the interior 26 of the aircraft powerplant 24. The inspection scope 28 and its scope head 36, for example, may be maneuvered to locate the scope head 36 next to the powerplant component 22. This maneuvering may include passing the scope head 36 through one or more passages, ducts, conduits, plenums, ports, etc. within the aircraft powerplant 24 until, for example, the scope head 36 is arranged next to an inspection location on the powerplant component 22. The inspection scope 28 and its scope head 36 may then be further maneuvered to push one or more of the inspection scope members 36, 40 and/or 42 up against the powerplant component 22 and its component surface 52 at the inspection location. The scope head member(s) 40 and/or 42, for example, may be abutted against the powerplant component 22, where each respective scope head member 40, 42 contacts the powerplant component 22 and its component surface 52 at the inspection location.

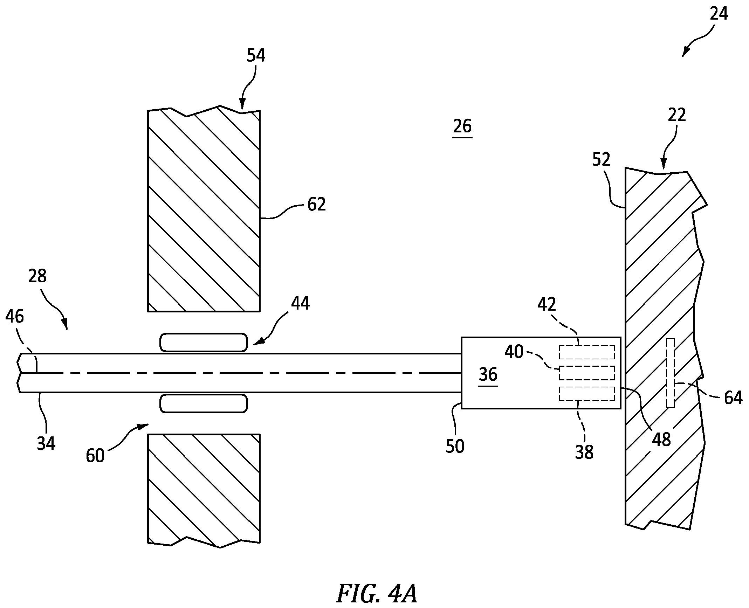

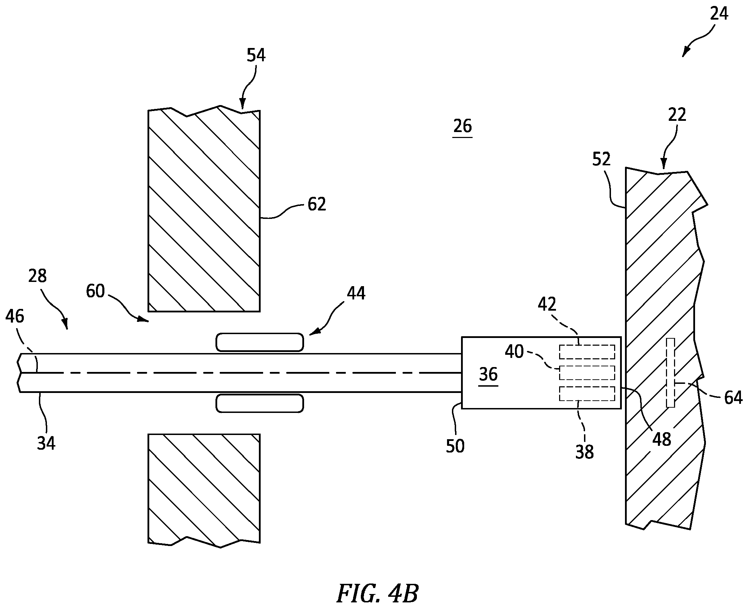

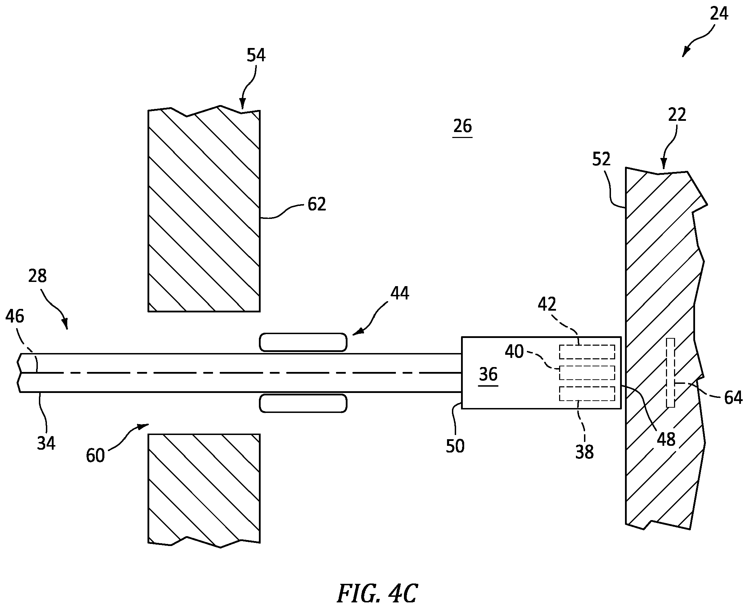

In step 306, the position of the scope head 36 and its scope head member(s) 40 and/or 42 may be fixed within the interior 26 of the aircraft powerplant 24 and relative to the powerplant component 22 using the expandable mount 44. For example, referring to FIG. 4A, the expandable mount 44 may be located within an aperture 60 in the second powerplant component 54 when the scope head member(s) 40 and/or 42 are abutted against the powerplant component 22 and its component surface 52. The expandable mount 44 may be expanded from the stowed arrangement (e.g., a retracted / contracted arrangement) of FIG. 4A to the deployed arrangement (e.g., an expanded arrangement) of FIG. 2A. In the deployed arrangement of FIG. 2A, the size of the expandable mount 44 is increased such that a radial outer periphery of the expandable mount 44 radially engages (e.g., contacts) a portion of the second powerplant component 54 forming the aperture 60. This engagement may center the inspection scope 28 and its inspection scope members 34 and 36 relative to the aperture 60. The engagement may also fix the position of the inspection scope 28 and its inspection scope members 34 and 36 relative to the aperture 60 through an interference fit. In another example, referring to FIG. 4B, the expandable mount 44 may be located partially within the aperture 60 and partially in a space between the powerplant components 22 and 54 when the scope head member(s) 40 and/or 42 are abutted against the powerplant component 22 and its component surface 52. With this arrangement, following the deployment (e.g., expansion) of the expandable mount 44, an interference fit is formed at the radial engagement between the expandable mount 44 and the second powerplant component 54. In addition, the expandable mount 44 may also axially abut against a side 62 of the second powerplant component 54 facing the powerplant component 22 and its component surface 52. The expandable mount 44 may thereby longitudinally lock a position of the inspection scope 28 and its members 36, 40 and 42 along the centerline 46. In still another example, referring to FIG. 4C, the expandable mount 44 may be located with the space between the powerplant components 22 and 54 when the scope head member(s) 40 and/or 42 are abutted against the powerplant component 22 and its component surface 52. With this arrangement, following the deployment (e.g., expansion) of the expandable mount 44, the expandable mount 44 may longitudinally lock the position of the inspection scope 28 and its members 36, 40 and 42 along the centerline 46.

In addition to the foregoing, the inspection head member(s) 40 and/or 42 may be preloaded against the powerplant component 22 and its component surface 52. The preload may be equal to or greater than one or two pounds (1-2 lbs; 0.5-0.9 kg); e.g., between 1.5 lbs (0.68 kg) and 4.5 lbs (2.0 kg). The present disclosure, however, is not limited to such an exemplary preloads and may change based on vibration actuator 40 and/or vibration sensor specifications.

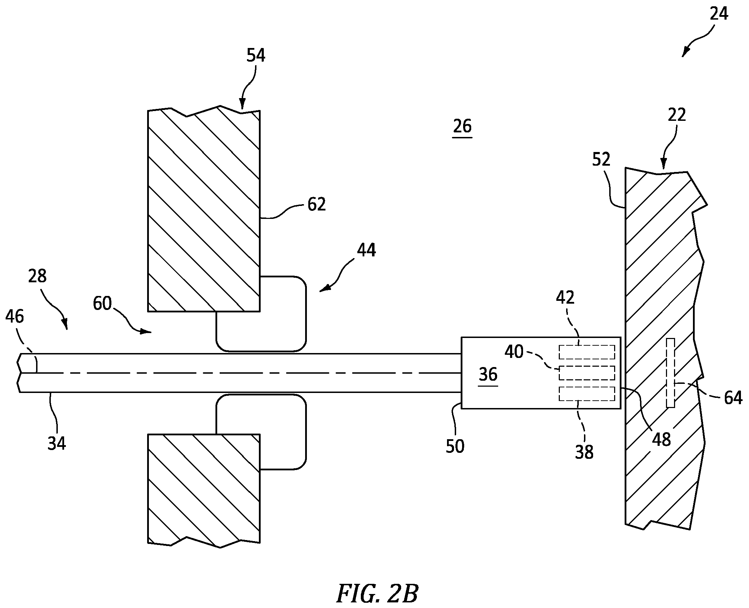

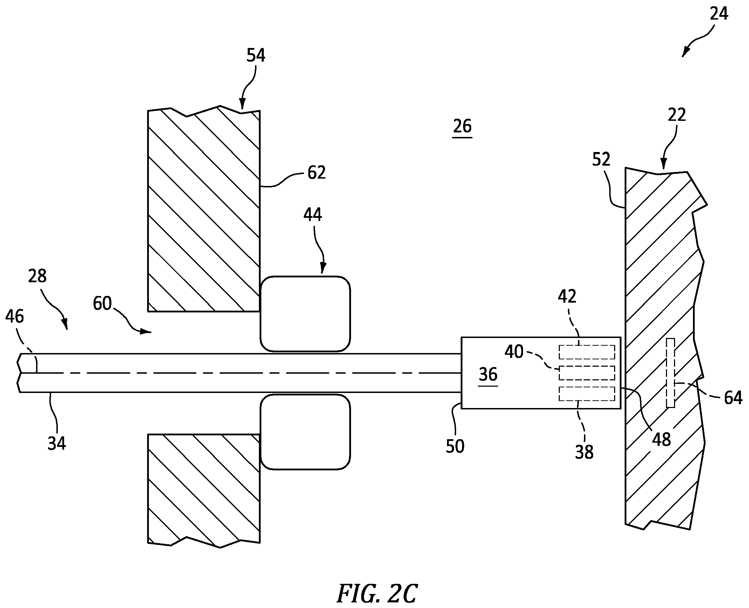

The preloading may occur during the abutting of the scope head member(s) 40 and/or 42 against the component surface 52. For example, in addition to placing the scope head member(s) 40 and/or 42 in contact with the component surface 52, the inspection scope 28 may be maneuvered to also exert some or all of the preload between the scope head member(s) 40 and/or 42 and the component surface 52. In another example, in addition to fixing the position of the scope head 36 and its scope head member(s) 40 and/or 42, the deployment of the expandable mount 44 may also push the inspection head member(s) 40 and/or 42 longitudinally towards the powerplant component 22 (e.g., see FIGS. 2B and 2C) to also exert some or all of the preload between the scope head member(s) 40 and/or 42 and the component surface 52. In still another example, following the deployment of the expandable mount 44, it is contemplated the scope body 34 or the scope head 36 may include another device (e.g., a longitudinal expansion joint) configured to further push the inspection head member(s) 40 and/or 42 towards the powerplant component 22 to exert some or all of the preload between the scope head member(s) 40 and/or 42 and the component surface 52.

In step 308, vibrations are induced in the powerplant component 22 using the vibration actuator 40. The control system 32, for example, may signal the vibration actuator 40 to vibrate (e.g., via a control signal or provision of an electrical current), and the vibration of the vibration actuator 40 may be transmitted into the powerplant component 22 through the preloaded contact between the vibration actuator 40 and the component surface 52. The vibrations may be induced to sweep across / over a range of frequencies during the step 308; e.g., a five kilohertz (5 kHz) range, a ten kilohertz (10 kHz) range, a twenty kilohertz (20 kHz) range, a one hundred kilohertz (100 kHz) range, or any other suitable range which will facilitate mapping of a response signature as described below. The vibrations may thereby be induced at multiple different frequencies spanning the frequency range.

In step 310, a vibratory response is measured in the powerplant component 22 using the vibration sensor 42. This vibratory response is induced by the vibrations transmitted into the powerplant component 22 by the vibration actuator 40. The vibration sensor 42 then generates the sensor data indicative of the measured vibratory response, and provides the sensor data to the control system 32.

In step 312, the sensor data is processed to determine whether or not the powerplant component 22 includes any internal defects 64. Herein, the term "defect" may describe a physical anomaly present within a component which may negatively affect a useful life of that component and/or performance of that component. Examples of the internal defect(s) 64 include, but are not limited to, cracks, voids, corrosion, density variations, areas of poor solidification (e.g., sintering) and/or the like.

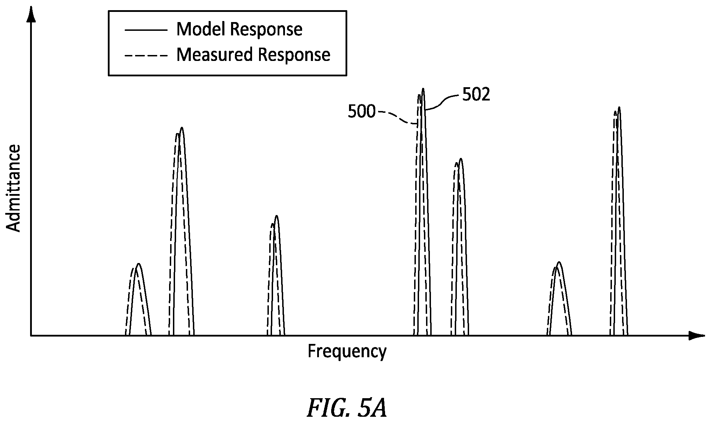

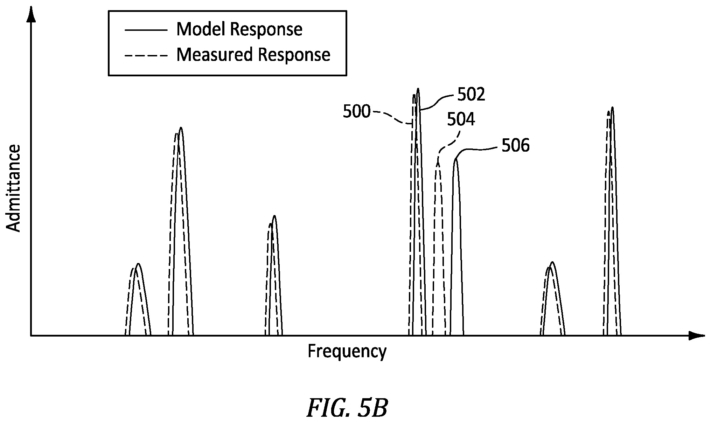

The control system 32, for example, may analyze the measured vibratory response to determine resonant frequencies and/or other structural mode parameters for the powerplant component 22. Referring to FIG. 5A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the control system 32 may determine the powerplant component 22 does not include, or there is a low probability that the powerplant component 22 includes, any internal defects. For example, a measured resonance signature 500 of the measured resonant frequencies in FIG. 5A is the same as, or is within tolerance of, a model resonance signature 502 of expected resonant frequencies for the model component without any internal defects. Note, the matching model and measured responses are shown in FIGS. 5A and 5B slightly laterally offset for clarity of illustration. By contrast referring to FIG. 5B, where one or more of the resonant frequencies and/or other structural mode parameters do not match (or are outside tolerance of) the corresponding expected resonant frequencies and/or other structural mode parameters for the model component without any internal defects, the control system 32 may determine the powerplant component 22 does include, or there is a high probability that the powerplant component 22 includes, one or more internal defects 64. For example, the resonance signature 500 of the measured resonant frequencies in FIG. 5B includes an outlier resonant frequency 504 which is different than (e.g., does not align with) and is outside of tolerance of a corresponding resonant frequency 506 for the resonance signature 502 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 300 and the inspection system 20 may non-destructively identify presence of internal defect(s) 64 within the powerplant component 22 while that powerplant component 22 remains installed with the aircraft powerplant 24 and/or the aircraft powerplant 24 remains installed onboard the aircraft.

When the step 312 identifies presence of no internal defects in material of the powerplant component 22, information indicative of such may be presented on the display 30. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 312 identifies the presence of internal defect(s) 64, information indicative of such may be presented on the display 30. This information may simply identify the presence of internal defects 64. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 300 is described above identifying whether or not the inspected powerplant component 22 includes any internal defects 64, this inspection method 300 may also (or alternatively) be extended to determine one or more other physical characteristics about the inspected powerplant component 22.

In step 314, after performing the step 310 or the step 312, the inspection scope 28 may be removed from the interior 26 of the aircraft powerplant 24. Alternatively, the inspection scope member(s) 36, 40 and 42 may be (e.g., slightly) retracted from the powerplant component 22 and its component surface 52. Thus, when the powerplant component 22 is rotatable (e.g., the powerplant component 22 is the rotor disk), the powerplant component 22 may be rotated about its rotational axis to facilitate repeating the foregoing inspection method 300 at another inspection location. Whether removing the inspection scope 28, retracting the inspection scope member(s) 36, 40 and 42 and/or otherwise adjusting the inspection scope 28, the expandable mount 44 may be stowed (e.g., retracted) from the deployed arrangement of FIGS. 2A-C to the stowed arrangement of FIGS. 4A-C. The inspection scope 28 may then be free to maneuver within the interior 26 of the aircraft powerplant 24 as needed for performance of the step 314.

In some embodiments, the vibrations induced in the powerplant component 22 during the step 308 may have a frequency equal to or greater than thirty kilohertz (30 kHz); e.g., equal to or greater than forty kilohertz (40 kHz) or fifty kilohertz (50 kHz) up to about two hundred and fifty kilohertz (250kHz). This frequency may be a lower bound, an upper bound or an intermediate frequency within the range of frequencies swept during the vibration inducement step 308. By vibrating the powerplant component 22 at such a relatively high frequency, the inspection method 300 and/or the inspection system 20 may detect one or more internal defects 64 with a dimension (e.g., a width, a length, etc.) equal to or less than one hundred mils (0.10 inches; 2.54 mm) or one hundred and fifty mils (0.15 inches; 3.81 mm). More particularly, the inspection method 300 and/or the inspection system 20 may detect one or more internal defects 64 with a relatively small dimension equal to or less than fifty mils (0.05 inches; 1.27 mm); e.g., equal to or less than forty mils (0.04 inches; 1.02 mm). Here, the powerplant component 22 is constructed from a metal. It is contemplated, however, the vibrations may alternatively be induced at a frequency below thirty kilohertz (30 kHz) when detecting larger internal defect(s) 64 within the powerplant component 22 and/or when inspecting a powerplant component with another material construction. Moreover, the vibrations may still alternatively be induced at a frequency above two hundred and fifty kilohertz (250kHz) when detecting even smaller internal defect(s) 64 within the powerplant component 22 and/or when inspecting a powerplant component with still another material construction.

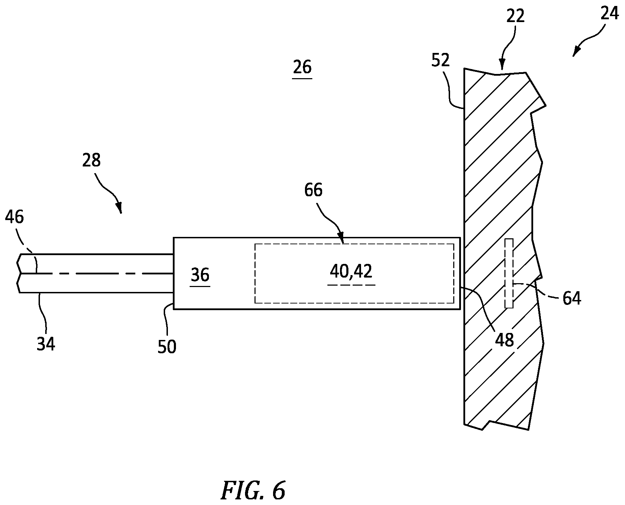

In some embodiments, referring to FIGS. 1, FIGS. 2A-C and 4A-C, the vibration actuator 40 and the vibration sensor 42 may be configured as discrete elements. In other embodiments, referring to FIG. 6, the vibration actuator 40 and the vibration sensor 42 are configured as a single device 66; e.g., a single piezoelectric device operable to both induce vibrations as well as measure a vibratory response.

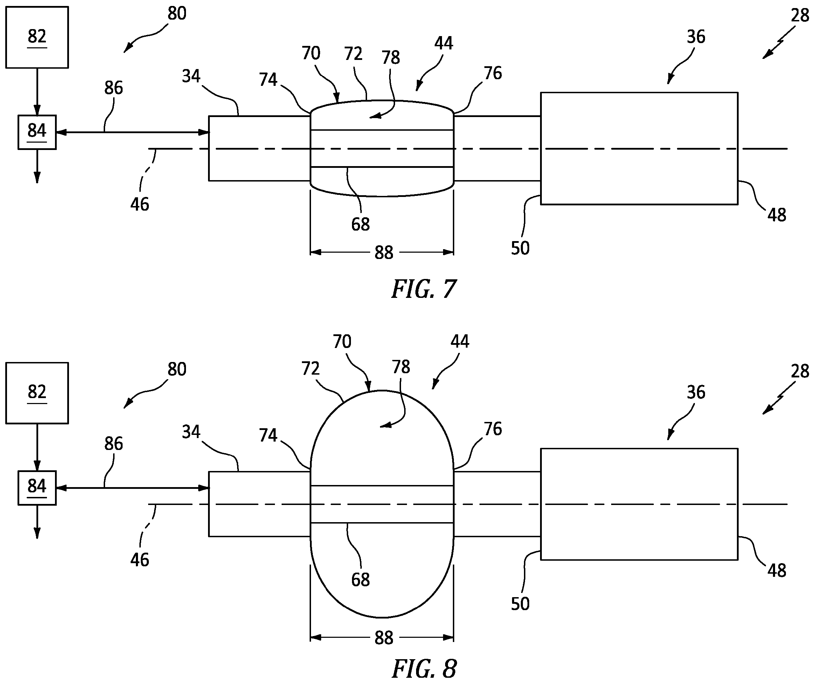

In some embodiments, referring to FIGS. 7 and 8, the expandable mount 44 may be configured as a fluidic expandable mount (e.g., a fluid actuated device) for the inspection scope 28. The expandable mount 44 of FIGS. 7 and 8, for example, includes a mount base 68 and an expandable bladder 70; e.g., an inflatable bladder.

The mount base 68 is a tubular member of the inspection scope 28 which extends longitudinally along the centerline 46. This mount base 68 may be configured as a tubular sleeve mounted with the scope body 34 (or the scope head 36). Alternatively, the mount base 68 may be configured as a (e.g., rigid) section of the scope body 34 (or the scope head 36).

A sidewall 72 of the expandable bladder 70 is disposed radially outboard of the mount base 68. The expandable bladder 70 and its bladder sidewall 72 extend longitudinally along the mount base 68 and the centerline 46 from a longitudinal first end 74 of the expandable bladder 70 to a longitudinal second end 76 of the expandable bladder 70. The expandable bladder 70 and its bladder sidewall 72 extend circumferentially about (e.g., completely around) the mount base 68 and the centerline 46 providing the expandable bladder 70 and its bladder sidewall 72 with, for example, a full-hoop (e.g., tubular) geometry. The bladder sidewall 72 may be formed from a compliant, deformable and/or elastic material. Examples of this bladder sidewall material include, but are not limited to, rubber, silicon, nylon, latex, polyurethane or other thermoplastic elastomers, or the like. This bladder sidewall material may (or may not) include internal fiber reinforcement and/or other reinforcement material.

The bladder sidewall 72 is connected to the mount base 68 by a sealed first connection at the bladder first end 74. The bladder sidewall 72 is connected to the mount base 68 by a sealed second connection at the bladder second end 76. However, the bladder sidewall 72 is disconnected and thereby disengageable from the mount base 68 elsewhere longitudinally along the centerline 46 between the first connection and the second connection. The expandable mount 44 and its expandable bladder 70 may thereby include a sealed internal volume 78 formed by and radially between the bladder sidewall 72 and the mount base 68. The bladder sidewall 72, for example, may form a radial outer peripheral boundary of the bladder volume 78. The mount base 68 may form a radial inner peripheral boundary of the bladder volume 78.

The inspection system 20 of FIGS. 7 and 8 also include a fluid system 80 with a fluid source 82, a fluid flow regulator 84 and a fluid conduit 86. The fluid source 82 may be configured as or otherwise include a fluid reservoir. Examples of the fluid reservoir include, but are not limited to, a tank, a cylinder, a pressure vessel or any other container capable of storing pressurized gas such as compressed air. This fluid source 82 is fluidly coupled to the bladder volume 78 sequentially through, for example, the flow regulator 84 and the fluid conduit 86, where the fluid conduit 86 may be internal to and extend longitudinally within the inspection scope 28 and its scope body 34 to the expandable mount 44. The flow regulator 84 is configured to regulate a flow of fluid (e.g., pressurized gas such as compressed air) from the fluid source 82 to the bladder volume 78. The flow regulator 84 is also configured to regulate a flow of the fluid from the bladder volume 78 back to the fluid source 82, or to ambient or another volume for dumping. Examples of the flow regulator 84 include a valve or a valve system. The present disclosure, however, is not limited to the foregoing exemplary fluid system configuration.

During deployment of the expandable mount 44, the control system 32 (see FIG. 1) signals the fluid system 80 to direct a quantity of the fluid from the fluid source 82 into the bladder volume 78. As the fluid fills the bladder volume 78, the bladder volume 78 increases in size and, thus, increases an overall size of the expandable bladder 70 and its bladder sidewall 72. The expandable bladder 70 may thereby be expanded from the stowed arrangement (e.g., a deflated arrangement) of FIG. 7 to the deployed arrangement (e.g., an inflated arrangement) of FIG. 8, or somewhere therebetween.

During stowing of the expandable mount 44, the control system 32 (see FIG. 1) signals the fluid system 80 to direct a quantity of the fluid out of the bladder volume 78. As the fluid is evacuated from the bladder volume 78, the bladder volume 78 decreases in size and, thus, decreases the overall size of the expandable bladder 70 and its bladder sidewall 72. The expandable bladder 70 may thereby be retracted from the deployed arrangement (e.g., inflated arrangement) of FIG. 8 to the stowed arrangement (e.g., deflated arrangement) of FIG. 7, or somewhere therebetween.

In some embodiments, referring still to FIGS. 7 and 8, a position of the bladder first end 74 may be fixed longitudinally along the centerline 46. The expandable bladder 70 and its bladder sidewall 72 of FIGS. 7 and 8, for example, are fixedly connected to the mount base 68 at the first connection. Similarly, a position of the bladder second end 76 may be fixed longitudinally along the centerline 46. The expandable bladder 70 and its bladder sidewall 72 of FIGS. 7 and 8, for example, are fixedly connected to the mount base 68 at the second connection. A longitudinal length 88 of the expandable bladder 70 (at a radial inboard location of the expandable bladder 70) is thereby the same whether the expandable bladder 70 is in its stowed / deflated arrangement of FIG. 7 or in its deployed / inflated arrangement) of FIG. 8.

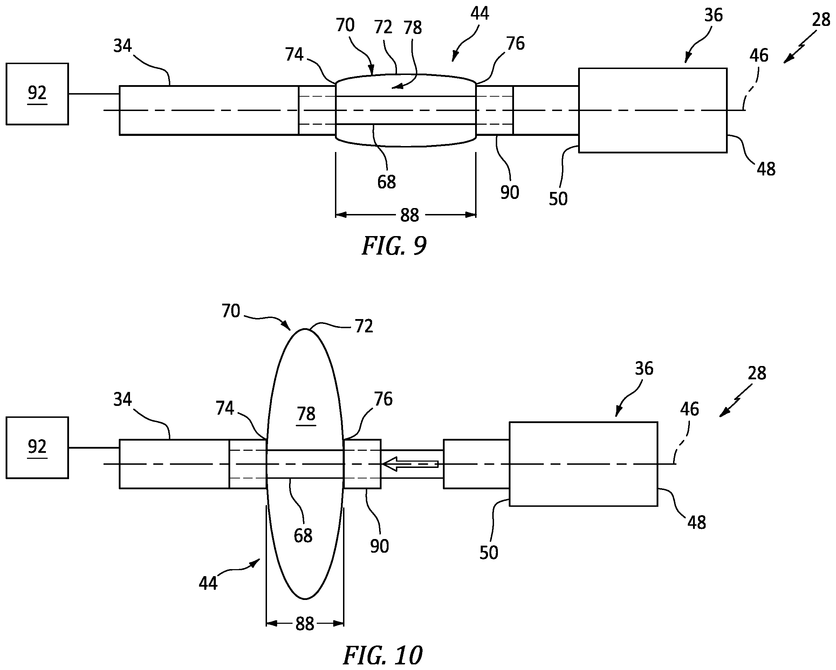

In other embodiments, referring to FIGS. 9 and 10, the position of the bladder second end 76 may be movable (e.g., translatable) longitudinally along the centerline 46. The bladder sidewall 72 of FIGS. 9 and 10, for example, is connected to a movable carriage 90 (e.g., a slide ring) by the second connection. This moveable carriage 90 may move (e.g., slide) longitudinally along the mount base 68. The movement of the moveable carriage 90 may be controlled by an actuator 92 through a lead screw type connection. With this arrangement, the control system 32 (see FIG. 1) may also signal the actuator 92 to move the moveable carriage 90 towards the bladder first end 74 during deployment of the expandable bladder 70 in order to increase radial expansion of the expandable bladder 70. The longitudinal length 88 of the expandable bladder 70 (at the radial inboard location of the expandable bladder 70) is thereby variable between the stowed / deflated arrangement of FIG. 7 and the deployed / inflated arrangement) of FIG. 8. More particular, the longitudinal length 88 of the expandable bladder 70 may decrease as the expandable bladder 70 is deployed / inflated. Note, while the bladder second end 76 is described above as being moveable and the bladder first end 74 is described above as being fixed, it is contemplated the bladder second end 76 may alternatively be fixed and the bladder first end 74 may alternatively be moveable.

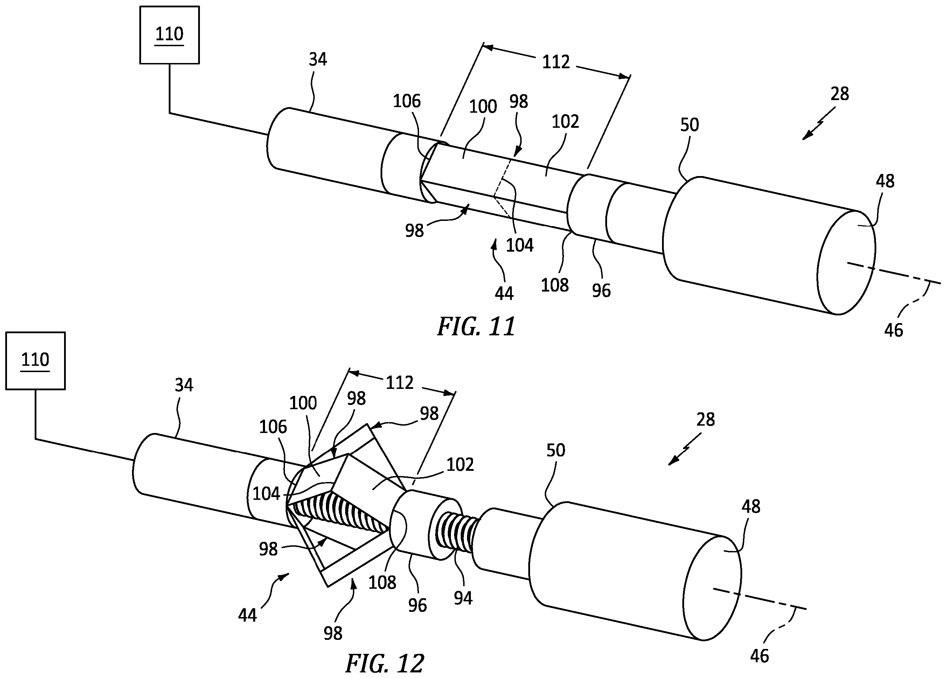

In some embodiments, referring to FIGS. 11 and 12, the expandable mount 44 may be configured as a mechanically expandable mount (e.g., a mechanically actuated device) for the inspection scope 28; e.g., a butterfly anchor, a toggle anchor, etc. The expandable mount 44 of FIGS. 11 and 12, for example, includes a mount base 94, a mount carrier 96 and one or more expansion elements 98.

The mount base 94 is a tubular member (e.g., a threaded tube) of the inspection scope 28 which extends longitudinally along the centerline 46.

The mount carrier 96 is movably (e.g., slidably, translatably, etc.) mounted on the mount base 94. The mount carrier 96 of FIGS. 11 and 12, for example, extends longitudinally along an outer periphery (e.g., threads) of the mount base 94. The mount carrier 96 extends circumferentially about (e.g., completely around) the mount base 94 and the centerline 46 thereby providing the mount carrier 96 with, for example, a full-hoop (e.g., tubular) geometry. The mount carrier 96 may radially engage the outer periphery (e.g., threads) of the mount base 94, where the mount carrier 96 is operable to move along the outer periphery longitudinally along the centerline 46.

The expansion elements 98 are arranged and may be equispaced circumferentially about the mount base 94 and the centerline 46 in an annular array. Each of these expansion elements 98 includes a first member 100 and a second member 102. Each of these members 100, 102 may be configured as an arm, a link, a strut or the like. The first member 100 is connected to (e.g., formed integral with or otherwise attached to) the second member 102 at a connection 104. This intermember connection 104 is configured to facilitate movement (e.g., pivoting, bending, etc.) between the first member 100 and the second member 102. For example, where the first member 100 is formed integral with the second member 102 in a common elongated body, the intermember connection 104 may be configured as a flexible (e.g., thinner, tapered, notched, or otherwise weakened) section of the elongated body between the stiffer (e.g., thicker, reinforced, or otherwise strengthened) first and second members 100 and 102. The first member 100 is connected to the mount base 94 at a first end 106 of the respective expansion element 98. The second member 102 is connected to the mount carrier 96 at a second end 108 of the respective expansion element 98.

Movement of the mount carrier 96 longitudinally along the mount base 94 may be controlled by an actuator 110 through a lead screw type connection. With this arrangement, the control system 32 (see FIG. 1) may signal the actuator 110 to move the mount carrier 96 longitudinally along the mount base 94 (e.g., by rotating the mount base 94) to deploy or to stow the expandable mount 44. For example, the mount carrier 96 may be moved longitudinally towards the expansion element first ends 106 during deployment of the expandable mount 44 from the stowed arrangement (e.g., retracted arrangement) of FIG. 11 to the deployed arrangement (e.g., expanded arrangement) of FIG. 12. As the mount carrier 96 moves, the first member 100 and the second member 102 of each expansion element 98 may move (e.g., pivot, bend, etc.) radially outward to accommodate a decreasing longitudinal distance 112 between the respective expansion element ends 106 and 108. More particularly, the first member 100 and the second member 102 may pivot, bend or otherwise move relative to one another at the intermember connection 104, and this intermember connection 104 may be displaced radially outward away from the centerline 46. In this manner, the expansion elements 98 may deform radially outwards and thereby increase a size (e.g., lateral width, diameter, peripheral boundary, etc.) of the expandable mount 44. By contrast, the mount carrier 96 may be moved longitudinally away from the expansion element first ends 106 during stowing of the expandable mount 44 from the deployed arrangement (e.g., expanded arrangement) of FIG. 12 to the stowed arrangement (e.g., retracted arrangement) of FIG. 11. As the mount carrier 96 moves, the first member 100 and the second member 102 of each expansion element 98 may move (e.g., pivot, bend, etc.) radially inward to accommodate the increasing longitudinal distance 112 between the respective expansion element ends 106 and 108. More particularly, the first member 100 and the second member 102 may pivot, bend or otherwise move relative to one another at the intermember connection 104, and this intermember connection 104 may be displaced radially inward towards the centerline 46. In this manner, the expansion elements 98 may deform radially inward (e.g., be flattened out) and thereby decrease the size of the expandable mount 44.

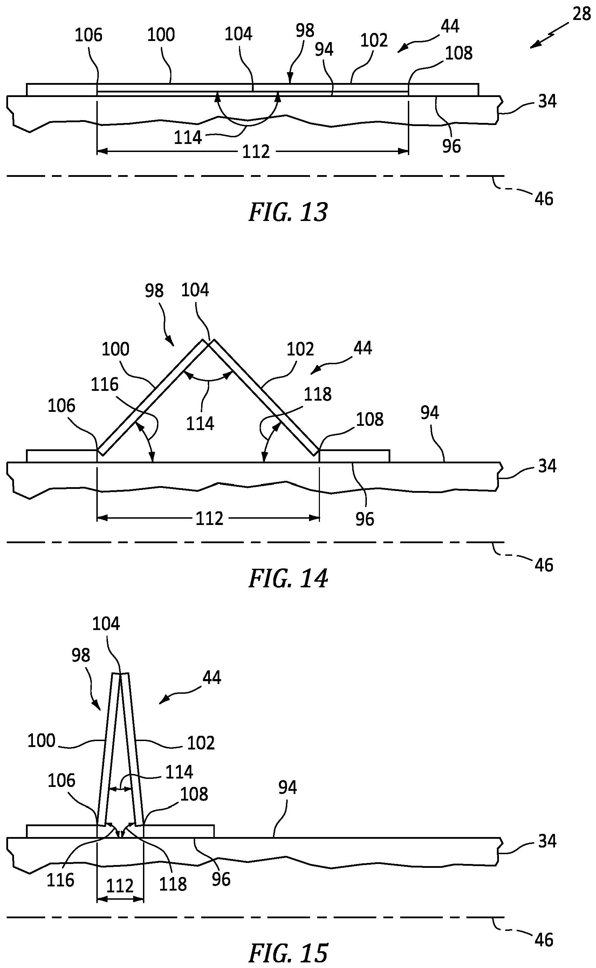

In the stowed arrangement of FIG. 13, each expansion element 98 may have a substantially (or completely) flat geometry when viewed, for example, in a reference plane parallel with (e.g., including) the centerline 46, at least along the expandable mount 44. For example, the first member 100 and the second member 102 of each expansion element 98 may lay along (e.g., flat against) the mount base 94. Here, the first member 100 may be substantially (or completely) parallel with the second member 102, and the first and the second members 100 and 102 may be substantially (or completely) parallel to the mount base 94 and/or the centerline 46, at least along the expandable mount 44. The first member 100 of each expansion element 98 of FIG. 13, for example, is angularly offset from the second member 102 by an offset angle 114. This intermember offset angle 114 be equal to, or within plus and/or minus five degrees (+/-5°) of, one hundred and eighty degrees (180°).

In the deployed arrangement of FIG. 14, each expansion element 98 may have an outwardly bent (e.g., V-shaped, bowed, curved, etc.) geometry when viewed, for example, in the reference plane. For example, the first member 100 and the second member 102 of each expansion element 98 project diagonally (e.g., radially and longitudinally) away from the mount base 94 to the intermember connection 104. Here, the first member 100 is angularly offset from the centerline 46 by a first member offset angle 116, and the second member 102 is angularly offset from the centerline 46 by a second member offset angle 118. The first member offset angle 116 may be equal to the second member offset angle 118 where, for example, the first member 100 and the second member 102 have equal lengths. The member offset angle 116, 118 may be between twenty degrees (20°) and ninety degrees (90°); e.g., about thirty degrees (30°), forty-five degrees (45°) or sixty degrees (60°). In addition, the intermember offset angle 114 may be between one hundred and sixty degrees (160°) and ninety degrees (90°) (see FIG. 14), or between ninety degrees (90°) and twenty degrees (20°) (see FIG. 15).

With the foregoing arrangement, the first member offset angle 116 and the second member offset angle 118 increase as the expandable mount 44 is deployed. By contrast, the intermember offset angle 114 decreases as the expandable mount 44 is deployed. Moreover, the longitudinal distance 112 between the respective expansion element ends 106 and 108 decreases as the expandable mount 44 is deployed.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
inserting a head (36) of an inspection scope (28) into an interior (26) of a powerplant (24), the head (36) of the inspection scope (28) comprising an actuator (40), and the powerplant (24) comprising a component (22) within the interior (26) of the powerplant (24);
arranging the head (36) of the inspection scope (28) within the interior (26) of the powerplant (24) with the actuator (40) contacting the component (22);
deploying an expandable mount (44) within the interior (26) of the powerplant (24) to fix a position of the head (36) of the inspection scope (28) within the interior (26) of the powerplant (24) and maintain contact between the actuator (40) and the component (22); and
inducing vibrations in the component (22) using the actuator (40).

2. The inspection method of claim 1, wherein
the inspection scope (28) includes the expandable mount (44), and a scope body (34) extending longitudinally along a centerline (46) to the head (34) of the inspection scope (28);
the head (36) of the inspection scope (28) is connected to the scope body (34) and disposed at a distal end (48) of the inspection scope (28); and
the expandable mount (44) is connected to the scope body (34) longitudinally next to the head (48) of the inspection scope (28).

3. The inspection method of claim 1, wherein
the inspection scope (28) includes the expandable mount (44), and a scope body (34) extending longitudinally to a longitudinal end (50) of the head (36) of the inspection scope (28);
the head (36) of the inspection scope (28) is located at a distal end (48) of the inspection scope (36); and
the expandable mount (44) is located at the longitudinal end (50) of the head (48) of the inspection scope (28).

4. The inspection method of claim 1, 2 or 3, wherein the deploying of the expandable mount (44) comprises directing a fluid into an internal volume of the expandable mount (44) to increase a size of the expandable mount (44).

5. The inspection method of claim 4, further comprising directing the fluid out of the internal volume of the expandable mount (44) to decrease the size of the expandable mount (44) following the inducing of the vibrations.

6. The inspection method of any preceding claim, wherein
the expandable mount (44) comprises an expandable bladder (70);
the expandable bladder (44) extends longitudinally along a centerline (46) between a first end (74) and a second end (76); and
the expandable bladder (70) extends circumferentially about the centerline (46).

7. The inspection method of claim 6, wherein
a position of the first end (74) of the expandable bladder (70) is fixed along the centerline (46); and
a position of the second end (76) of the expandable bladder (70) is fixed along the centerline (46).

8. The inspection method of claim 6, wherein
a position of the first end (74) of the expandable bladder (70) is fixed along the centerline (46); and
a position of the second end (76) of the expandable bladder (70) is moveable along the centerline (46), and optionally the position of the second end (76) of the expandable bladder (70) moves along the centerline (46) towards the position of the first end (74) of the expandable bladder (70) as the expandable bladder (70) is inflated.

9. The inspection method of any preceding claim, wherein
the component (22) is a first component (22), the powerplant (24) further comprises a second component (54) within the interior (26) of the powerplant (24), and the second component (54) comprises an aperture (60);
the inspection scope (28) extends longitudinally along a/the centerline (46) through the aperture (60) with the head (36) of the inspection scope (28) disposed between the first component (22) and the second component (54); and
the expandable mount (44) is disposed between the first component (22) and the second component (54) and longitudinally abutted against the second component (54) adjacent the aperture (60) when the expandable mount (44) is deployed.

10. The inspection method of any of claims 1 to 8, wherein
the component (22) is a first component (22), the powerplant (24) further comprises a second component (54) within the interior (26) of the powerplant (24), and the second component (54) comprises an aperture (60) ;
the inspection scope (28) extends longitudinally along a/the centerline (46) through the aperture (60) with the head (36) of the inspection scope (28) disposed between the first component (28) and the second component (54); and
the expandable mount (44) is disposed at least partially within the aperture (60) and radially abutted against the second component (54) when the expandable mount (44) is deployed.

11. The inspection method of any preceding claim, wherein the position of the head (36) of the inspection scope (28) is fixed within the interior of the powerplant (24) by the expandable mount (44) to further maintain a preload between the actuator (40) and the component (22), and/or further comprising stowing the expandable mount (44) following the inducing of the vibrations.

12. The inspection method of any preceding claim, further comprising measuring a vibratory response in the component (22) excited by the vibrations using a sensor (42) to provide sensor data, and optionally determining a characteristic of the component (22) based on the sensor data.

13. The inspection method of any preceding claim, wherein
the powerplant (24) comprises a turbine engine; and
the component (22) is configured as a rotor disk within the turbine engine,
optionally the powerplant (24) is installed with an aircraft during the inserting, the arranging, the deploying and the inducing.

14. A system (20) for inspecting a component (22) within an interior (26) of a powerplant (24), the system (20) comprising:
an inspection scope (28) including a scope head (36), an expandable mount (44) and a scope body (34) that extends longitudinally along a centerline (46) to a proximal end (50) of the scope head (36), the scope head (34) comprising an actuator (40) and a sensor (42) with the actuator (40) and the sensor (42) disposed at a distal end (48) of the inspection scope (28), the expandable mount (44) disposed at the proximal end (50) of the scope head (36), the inspection scope (28) configured for insertion of the scope head (36) into the interior (26) of the powerplant (24) to abut the actuator (40) and the sensor (42) against the component (22), the actuator (40) configured to induce vibrations in the component (22), the sensor (42) configured to measure a vibratory response in the component (220 excited by the vibrations to provide sensor data, and the expandable mount (44) configured to expand to:
maintain contact between the actuator (40) and the component (22) during the inducement of the vibrations in the component (22); and
maintain contact between the sensor (42) and the component (22) during the measurement of the vibratory response in the component (22); and
a processing system (58) configured to process the sensor data to determine a characteristic of the component (22) based on the sensor data.

15. The system of claim 14, further comprising a fluid source (82) configured to direct a gas into an internal volume of an inflatable bladder (70) to expand a size of the inflatable bladder (70), the expandable mount (44) comprising the inflatable bladder (70).
